# EUROPÄISCHE PATENTANMELDUNG

(11) **EP 0 718 938 A1**
(43) Veröffentlichungstag der Anmeldung: **26.06.1996**
(21) Anmeldenummer: 95115303.0
(22) Anmeldetag: 28.09.1995
(51) Int. Cl.: H02B 1/048, H02B 1/044

(54) **Vorrichtung zum Befestigen eines elektrischen Gerätes an einer Montageplatte**

(30) Priorität: 23.12.1994 DE 4446167
(71) Anmelder: SCHNEIDER ELECTRIC GMBH, D-40880 Ratingen (DE)
(72) Erfinder: Stubbig, Joachim, D-51645 Gummersbach (DE)
(74) Vertreter: Köhne, Friedrich, Dipl.-Ing.

(57) **Zusammenfassung**

Vorrichtungen zum Befestigen eines elektrischen Gerätes, insbesondere Befehls- und / oder Meldegerätes, weisen ein Einsatzgehäuse auf, welches durch eine Bohrung einer Montageplatte bis zu einem Anschlag hindurchschiebbar ist und welches mit einer auf ein Außengewinde des Einsatzgehäuses aufschraubbaren Mutter versehen ist.

Um eine Vorrichtung zu schaffen, die einfach aufgebaut und herstellbar ist, die im Herstellerwerk als vollständige Einheit mit unverlierbaren Einzelteilen montagefertig zusammensetzbar ist, welche ferner eine Einmannmontage gestattet und welche an alle gängigen Montageplatten unterschiedlicher Dicke befestigbar ist, wird vorgeschlagen, daß die Mutter an mindestens zwei diametral einander gegenüberliegenden Stellen am Umfang federnd nach außen spreizbare Rasthaken aufweist, daß das Einsatzgehäuse auf dem äußeren Umfang mit Ausnehmungen versehen ist, in welche die Rasthaken bei der Montage einwärts schwenkbar sind, und daß zwischen der Mutter und dem Einsatzgehäuse eine Fixiervorrichtung zum Fixieren der Mutter in einem Vormontagezustand vorgesehen ist.

## Beschreibung

Vorrichtung zum Befestigen eines elektrischen Gerätes an einer Montageplatte.

Die Erfindung bezieht sich auf eine Vorrichtung zum Befestigen eines elektrischen Gerätes, insbesondere Befehls- und / oder Meldegerätes, an einer mit einer Bohrung versehenen Montageplatte, mit einem durch die Bohrung bis zu einem Anschlag hindurchschiebbaren Einsatzgehäuse und mit einer auf ein Außengewinde des Einsatzgehäuses aufschraubbaren Mutter.

Es ist herkömmliche Technik, daß elektrische Geräte einzeln oder meist in Reihen neben- und / oder übereinander auf Montageplatten dadurch befestigt werden, daß ein Teil des Gerätes mit den Bedienungs- oder Anzeigeelementen aus der Vorderseite der Montageplatte hervorragt, während der eigentliche Schaltteil des Gerätes mit den elektrischen Anschlüssen und der Verdrahtung auf der Rückseite der Montageplatte angeordnet ist. Die hier angesprochenen Geräte werden in der Fachwelt als Befehls- und Meldegeräte bezeichnet. Hierzu gehören z. B. Leuchtmelder, Drucktastenschalter, durch Schlüssel betätigbare oder abschließbare Schalter oder auch Nockenschalter, die durch einen Drehgriff betätigbar sind. Montageplatten finden sich üblicherweise in Schaltschränken, sie können aber auch als freistehende Wandplatten oder als Platte eines Schaltpultes ausgebildet sein. Es gibt bereits zahlreiche Konstruktionen zum Befestigen von elektrischen Geräten an derartigen Montageplatten. Normalerweise werden die Geräte durch die Bohrung der Montageplatte hindurchgeführt und dann mit der Montageplatte verschraubt. Dies ist aber sehr aufwendig, umständlich und zeitraubend, weil für diese Arbeiten bei großen Montageplatten zwei Personen erforderlich sind, nämlich eine Person, die das Gerät von der Vorderseite durch die Bohrung der Montageplatte hindurchführt und eine andere Person, die dann auf der Rückseite der Montageplatte die Befestigung vornimmt. Zur Arbeitserleichterung sind daher schon zahlreiche Konstruktionen vorgeschlagen worden, die eine Befestigung der Geräte durch eine Person ermöglichen. Hierzu gehören z. B. Konstruktionen, bei denen das Gerät im wesentlichen aus zwei Teilen besteht, die durch Bajonettverschluß miteinander verbunden werden können. Aber auch diese bekannten Konstruktionen sind sehr bau- und arbeitsaufwendig.

Eine spezielle zu Anfang angegebene Vorrichtung ist aus der EP 0 074 427 B1 bekannt. Bei dieser Vorrichtung ist eine Einmannmontage möglich, indem das Einsatzgehäuse von der Vorderseite der Montageplatte durch die Bohrung hindurchgeführt wird. An dem Einsatzgehäuse sind zwei einander gegenüberliegende nach außen stehende federnde Zungen fest angebracht, die beim Einschieben durch die Bohrung etwas nach innen zusammengedrückt werden und die dann in der richtigen Stellung des Einsatzgehäuses wieder frei nach außen federn und hinter den inneren Rand der Bohrung greifen können, so daß das Einsatzgehäuse nicht mehr aus der Bohrung der Montageplatte herausfallen kann. Von wesentlichem Nachteil ist, daß durch die fest angeordneten federnden Zungen die Dicke der Montageplatte vorgegeben sein muß. In der Praxis haben die Montageplatten aber je nach Größe und Anordnung unterschiedliche Dicken, was bei dem bekannten Einsatzgehäuse entsprechend unterschiedliche Gestaltungen voraussetzt, dies auch deshalb, weil das Einsatzgehäuse auf der Rückseite der Montageplatte ein Außengewinde aufweist, auf welches zur endgültigen Befestigung eine Mutter direkt aufschraubbar ist. Es kommt hinzu, daß das bekannte Einsatzgehäuse im wesentlichen nur Betätigungselemente enthält. Das eigentliche elektrische Gerät muß hierbei noch dazu unter Zwischenschaltung einer Kupplungsplatte in anschließenden Arbeitsvorgängen an dem zuvor fest angebrachten Einsatzgehäuse befestigt und angeschlossen werden. Da die Einzelteile des Gesamtgerätes separat zum Kunden angeliefert werden, können die Montagearbeiten, abgesehen von der Verlierbarkeit einzelner Teile, nur von geschultem Fachpersonal durchgeführt werden. Insgesamt ergibt sich ein großer Herstellungs- und Arbeitsaufwand.

Der Erfindung liegt die Aufgabe zu Grunde, eine Vorrichtung zu schaffen, die einfach aufgebaut und herstellbar ist, die im Herstellerwerk als vollständige Einheit mit unverlierbaren Einzelteilen montagefertig zusammensetzbar ist, welche eine Einmannmontage gestattet und welche ferner an alle gängigen Montageplatten unterschiedlicher Dicke befestigbar ist.

Die gestellte Aufgabe wird erfindungsgemäß dadurch gelöst, daß die Mutter an mindestens zwei diametral einander gegenüberliegenden Stellen am Umfang federnd nach außen spreizbare Rasthaken aufweist, daß das Einsatzgehäuse auf dem äußeren Umfang mit Ausnehmungen versehen ist, in welche die Rasthaken bei der Montage einwärts schwenkbar sind, und daß zwischen der Mutter und dem Einsatzgehäuse eine Fixiervorrichtung zum Fixieren der Mutter in einem Vormontagezustand vorgesehen ist.

Vorteilhafte Ausgestaltungen der Erfindung ergeben sich aus den Unteransprüchen.

In der Zeichnung sind Ausführungsbeispiele der Erfindung im Schema dargestellt, und zwar zeigen
Fig. 1 eine Explosionsdarstellung, wobei die Einzelteile der Vorrichtung mit Abstand übereinander in Perspektive dargestellt sind,
Fig. 2 einen Vertikalschnitt durch die Vorrichtung in zusammengesetztem Zustand, wobei der linke Teil den Vor-montagezustand zeigt und der rechte Teil den Montagezustand an einer dicken Montageplatte,
Fig. 3 einen Vertikalschnitt entsprechend Fig. 2, jedoch in einer Montagestellung an einer dünnen Montageplatte,
Fig. 4 eine Explosionsdarstellung eines anderen Ausführungsbeispieles, wobei die Einzelteile der Vorrichtung mit Abstand übereinander in Perspektive dargestellt sind,
Fig. 5 eine perspektivische Darstellung der Mutter in vergrößertem Maßstab,
Fig. 6 einen Ausschnitt aus Fig. 5 gemäß Pfeil VI in Fig. 5,
Fig. 7 einen Vertikalschnitt durch die Vorrichtung gemäß Fig. 4 in zusammengesetztem Zustand, jedoch in einer anderen Schnittebene und
Fig. 8 einen Ausschnitt aus Fig. 7 gemäß Pfeil VIII in vergrößertem Maßstab.

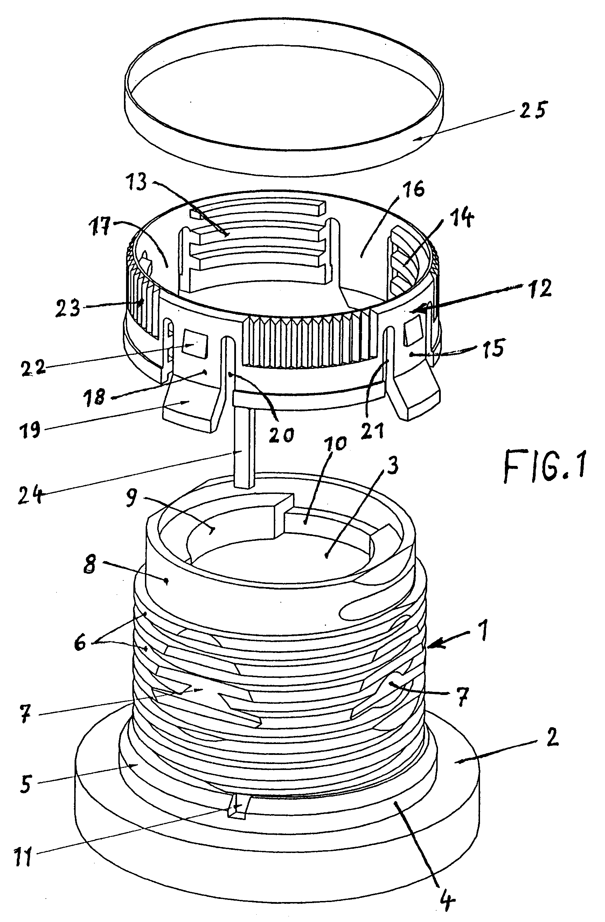

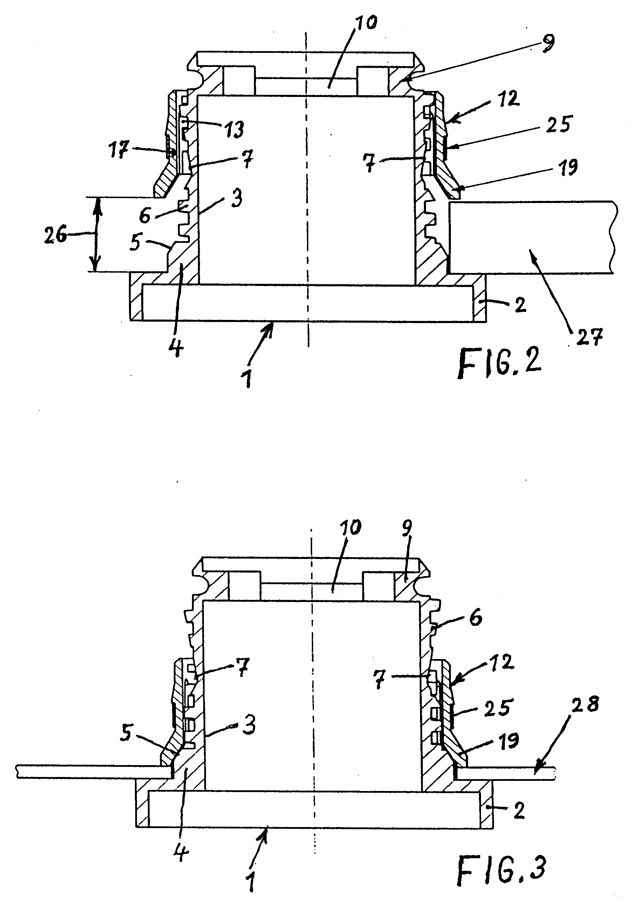

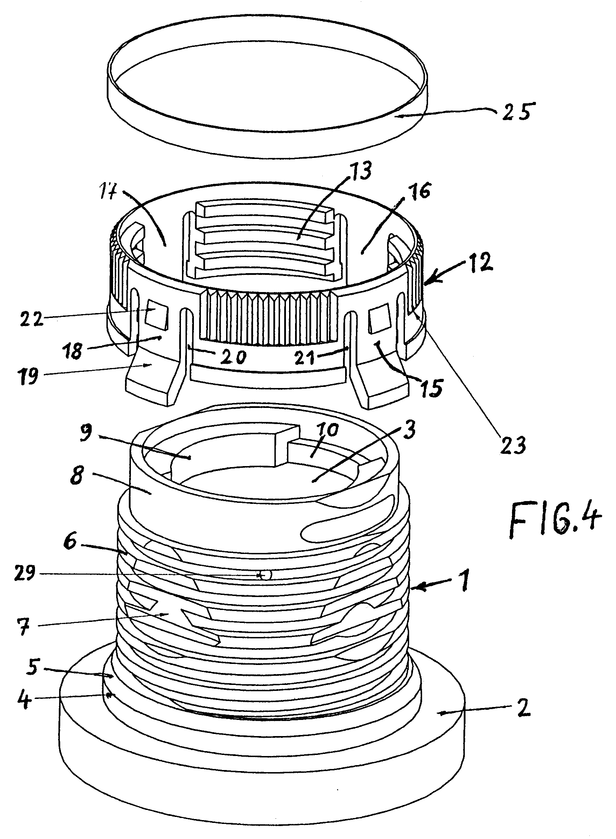

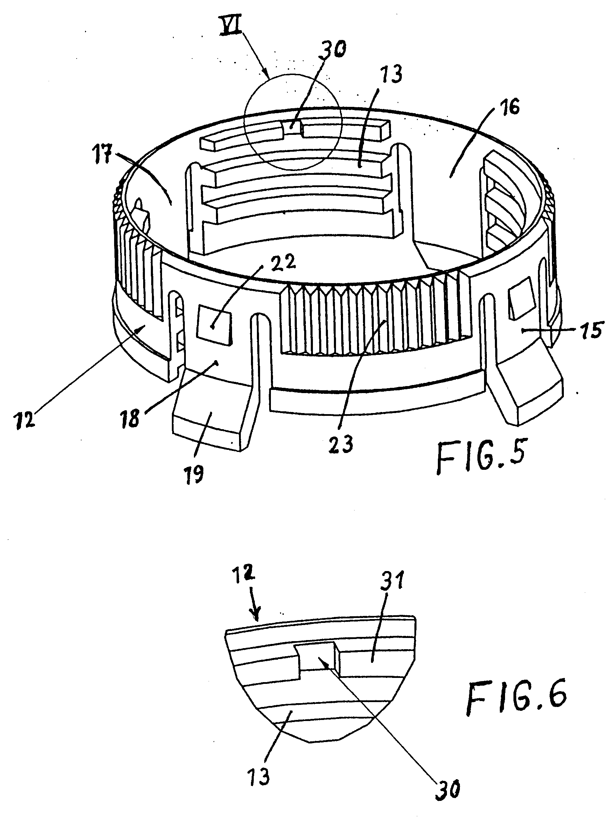

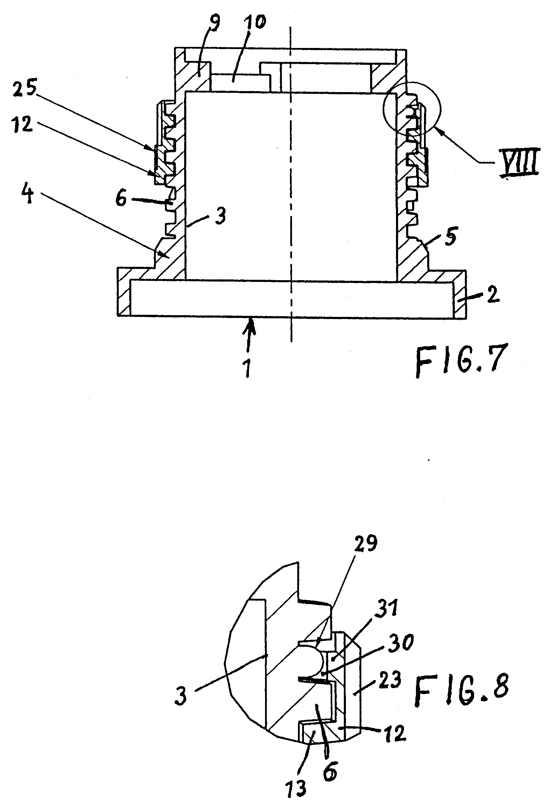

Die beiden Ausführungsbeispiele gemäß den Fig. 1 bis 3 einerseits und den Fig. 4 bis 8 andererseits stimmen in wesentlichen Teilen miteinander überein, so daß für alle gleichen oder gleichwirkenden Teile jeweils die gleichen Bezugszeichen verwendet worden sind. In beiden Fällen weist die Vorrichtung ein längliches hohl ausgebildetes und im wesentlichen zylindrisches Einsatzgehäuse 1 auf, welches an seinem unteren bzw. äußeren Ende einen Flanschring 2 besitzt, dessen Außendurchmesser größer als der Durchmesser der betreffenden Bohrung in der Montageplatte gewählt ist, so daß der Flanschring 2 in montiertem Zustand der Vorrichtung entsprechend an der Außenfläche der Montageplatte anliegt, wie in den nachfolgend noch näher erläuterten Fig. 2 und 3 gezeigt ist. Statt des Flanschringes kann auch ein Flansch mit anderen äußeren Abmessungen, z. B. rechteckig oder quadratisch, vorgesehen werden. An den Flanschring 2 ist einstückig ein Hohlzylinder 3 angeformt. Außerdem ist auf der Innenseite des Flanschringes 2 ein Zentrierring 4 einstückig angeformt, dessen Außendurchmesser an den Innendurchmesser der Bohrung in der Montageplatte angepaßt ist. Zur Herstellungs- und Montagevereinfachung hat der Zentrierring 4 eine innere Schrägfläche 5. Der Hohlzylinder 3 des Einsatzgehäuses 1 besitzt ein Außengewinde 6, welches jedoch am oberen Ende einen Zylindervorsprung 8 freiläßt. Auf das Außengewinde 6 ist eine mit einem Innengewinde versehene Mutter 12 aufschraubbar.

Die Mutter 12 weist an mindestens zwei diametral einander gegenüberliegenden Stellen am Umfang federnd nach außen spreizbare Rasthaken auf. Bei den zeichnerisch dargestellten Ausführungsbeispielen sind vier auf dem Umfang gleichmäßig verteilte Rasthaken 15, 16, 17 und 18 vorgesehen. Entsprechend einer noch näher erläuterten Vormontagestellung ist das Einsatzgehäuse 1 auf dem äußeren Umfang mit Ausnehmungen 7 versehen, in welche die Rasthaken bei der Montage an der Montageplatte einwärts schwenken können. Wenn wie in den gezeichneten Ausführungsbeispielen vier Rasthaken 15, 16, 17 und 18 vorgesehen sind, so ist auch das Einsatzgehäuse 1 mit vier Ausnehmungen 7 versehen, welche im Vormontagezustand den Rasthaken gegenüberliegen.

Die Rasthaken 15, 16, 17 und 18 weisen einen federnden Steg mit einem nach außen abgewinkelten Teil 19 auf. Zu beiden Seiten des Steges der Rasthaken sind Schlitze 20 und 21 vorgesehen. Die federnde Elastizität der Rasthaken ergibt sich dadurch, daß die Mutter 12, ebenso wie das Einsatzgehäuse 1, aus einem zähharten Kunststoff besteht, dem aber eine gewisse Elastizität innewohnt. Auf Grund der Formgestaltung des Einsatzgehäuses und des ringförmigen Körpers der Mutter wirkt sich die Elastizität aber nur auf die schwenkbare Beweglichkeit der Rasthaken 16, 17 und 18 aus. Auf der Außenseite der Stege der Rasthaken 15, 16, 17 und 18 sind Fixiernocken 22 angeformt, die zweckmäßigerweise einen flachen dreieckigen Querschnitt aufweisen. Sie dienen dazu, einen Sicherungsring 25 zu halten, der von oben über die Mutter 12 geschoben werden kann, so daß die obere Kante des Sicherungsringes an den unteren Kanten der Fixiernocken 22 anliegt. Der Sicherungsring 25 dient dazu, zu verhindern, daß die Rasthaken sich beim Festschrauben der Mutter zu weit nach außen abbiegen können.

Das Innengewinde der Mutter 12 ist im Bereich der Rasthaken 15, 16, 17 und 18 unterbrochen, so daß Innengewindeteile 13, 14 gebildet sind. Der Außenumfang der Mutter 12 besitzt in den Bereichen zwischen den Rasthaken 15, 16, 17 und 18 Rändelungen 23, die das Aufschrauben der Mutter 12 auf das Einsatzgehäuse 1 erleichtern, so daß sich im allgemeinen der Einsatz von Spezialwerkzeugen bei der Montage erübrigt. Wenn sich allerdings bei der Montage auf der Rückseite der Montageplatte besondere Platzprobleme ergeben, so ist auch die Verwendung eines entsprechenden Werkzeuges, z. B. eines Spezialschlüssels, möglich.

Zwischen der Mutter 12 und dem Einsatzgehäuse 1 ist eine Fixiervorrichtung vorgesehen, die zum Fixieren der Mutter 12 in einem Vormontagezustand dient. Der Vormontagezustand bzw. die Stellung der Mutter 12 ist im linken Teil der Figur 2 dargestellt, und zwar befindet sich die Unterkante der Rasthaken 15, 16, 17 und 18 mit Abstand 26 von der inneren Anlagefläche des Flanschringes 2. In diesem Vormontagezustand können die Rasthaken in die Ausnehmungen 7 des Einsatzgehäuses 1 einwärtsschwenken.

Bei dem Ausführungsbeispiel nach Figur 1 besteht die Fixiervorrichtung aus einem achsparallel verlaufenden Steg 24, der an dem nach der Montageplatte zuliegenden Rand der Mutter 12 angeformt ist, und aus einer Nut 11, die sich in dem Zentrierring 4 des Einsatzgehäuses 1 befindet. Zweckmäßigerweise ist der Steg 24 an der Verbindungsstelle mit der Mutter 12 mit einer Sollbruchstelle versehen.

Bei dem Ausführungsbeispiel gemäß den Figuren 4 bis 8 wird die Fixiervorrichtung aus einem Fixiernocken 29 auf dem äußeren Umfang des Einsatzgehäuses 1 und einer Fixiernut 30 in der Innenwand der Mutter 12 gebildet. Gemäß einer vorteilhaften konstruktiven Ausgestaltung ist der Fixiernocken 29 zwischen den beiden äußeren Gewindegängen des Außengewindes 6 des Einsatzgehäuses 1 vorgesehen. Die Fixiernut 30 befindet sich dann in einem äußeren Gewindegang 31 eines inneren Gewindeteils 13 der Mutter 12.

Bei beiden Ausführungsbeispielen nach den Figuren 1 bis 3 einerseits und den Figuren 4 bis 8 andererseits ist das Einsatzgehäuse 1 an dem von der Montageplatte abliegenden Ende mit Verstärkungs- und Befestigungsrippen 9 und 10 ausgestattet, die zur Befestigung des eigentlichen, nicht gezeichneten elektrischen Gerätes dienen, welches vorzugsweise im Herstellerwerk im Innern des Einsatzgehäuses eingesetzt werden kann.

Die Wirkungsweise bzw. die Montage bei den beiden zuvor beschriebenen Ausführungsbeispielen ist folgende. Zunächst wird der Sicherungsring 25 über die Mutter 12 gestreift, bis der Sicherungsring 25 hinter die Fixiernocken 22 greift, so daß die Fixiernocken 22 ein Zurückrutschen des Sicherungsringes 25 verhindern. Danach wird die Mutter 12 auf das Einsatzgehäuse 1 aufgeschraubt, bis zu einer Stellung entsprechend dem Abstand 26 in Figur 2, in welcher der Steg 24 in die Fixiernut 11 einschnappt. Beim Ausführungsbeispiel nach den Figuren 4 bis 8 erfolgt das Aufschrauben der Mutter 12 bis zu einer entsprechenden Stellung, in welcher der Fixiernocken 29 in die Fixiernut eingreift. Dies ist der Vormontagezustand der Vorrichtung, in welchem die Vorrichtung dem Kunden bzw. dem Verbraucher angeliefert wird. In diesem vormontierten Zustand bildet die Vorrichtung eine Einheit, bei der die Einzelteile, insbesondere die Mutter 12, unverlierbar gehalten sind. Zur Montage an der Montageplatte wird die Vorrichtung von der Vorderseite der Montageplatte durch die entsprechende Bohrung geschoben, bis der Flanschring 2 an der Vorderseite der Montageplatte anliegt und der Zentrierring mit geringem Spiel in die Bohrung eingreift. Beim Einschieben der Vorrichtung durch die Bohrung der Montageplatte können die Rasthaken nach innen in die beschriebenen Ausnehmungen federnd einwärtsschwenken. Nach dem Einschieben federn die Rasthaken wieder selbsttätig nach außen, so daß eine Selbsthaltung der Vorrichtung gewährleistet ist. Anschließend kann die Mutter 12 im Uhrzeigersinne so weit aufgeschraubt werden, bis die äußeren Enden der Rasthaken hinter den Rand der Bohrung der betreffenden Montageplatte greifen und eine feste kraftschlüssige Verbindung hergestellt ist. Von wesentlicher Bedeutung ist nun, daß die Vorrichtung an unterschiedlich dicken Montageplatten befestigt werden kann. Figur 2 zeigt eine dicke Montageplatte 27. In der Praxis kann die Dicke beispielsweise 6 mm oder mehr betragen. Figur 3 zeigt eine dünne Montageplatte 28 mit einer Dicke von beispielsweise 1 mm. Zur Demontage wird die Mutter 12 gegen den Uhrzeigersinn gedreht, bis sich die Mutter von dem Einsatzgehäuse 1 löst und das Einsatzgehäuse nach vorn wieder aus der Bohrung nach der Vorderseite herausgezogen werden kann. Bei dem Ausführungsbeispiel nach Figur 1 bricht der Steg 24 ab, wenn die Mutter 12 aus der Vormontagestellung in die endgültige Betriebsstellung an der Montageplatte festgeschraubt wird. Bei Wiedereinbau dieser Vorrichtung ist dann die Mutter 12 gegen eine andere Mutter 12 auszutauschen, die dann wieder den Fixiersteg 24 aufweist. Beim Ausführungsbeispiel nach den Figuren 4 bis 8 ist ein Austausch der Mutter nicht erforderlich, vielmehr ist hier eine oftmalige Wiederverwendung der Vorrichtung bzw. mehrmalige Montage und Demontage möglich.

## Patentansprüche

1. Vorrichtung zum Befestigen eines elektrischen Gerätes, insbesondere Befehls- und / oder Meldegerätes, an einer mit einer Bohrung versehenen Montageplatte (27, 28), mit einem durch die Bohrung bis zu einem Anschlag (2) hindurchschiebbaren Einsatzgehäuse (1) und mit einer auf ein Außengewinde (6) des Einsatzgehäuses (1) aufschraubbaren Mutter (12), dadurch gekennzeichnet, daß die Mutter (12) an mindestens zwei diametral einander gegenüberliegenden Stellen am Umfang federnd nach außen spreizbare Rasthaken (15, 17; 16, 19) aufweist, daß das Einsatzgehäuse (1) auf dem äußeren Umfang mit Ausnehmungen (7) versehen ist, in welche die Rasthaken (15, 17; 16, 19) bei der Montage einwärts schwenkbar sind, und daß zwischen der Mutter (12) und dem Einsatzgehäuse (1) eine Fixiervorrichtung (11, 24; 29, 30) zum Fixieren der Mutter (12) in einem Vormontagezustand (26) vorgesehen ist.

2. Vorrichtung nach Anspruch 1, dadurch gekennzeichnet, daß die Mutter (12) vier auf dem Umfang gleichmäßig verteilte Rasthaken (15, 16, 17, 18) aufweist, und daß das Einsatzgehäuse (1) mit vier Ausnehmungen (7) versehen ist, welche im Vormontagezustand (26) den Rasthaken (15, 16, 17, 18) gegenüberliegen.

3. Vorrichtung nach Anspruch 1 oder 2, dadurch gekennzeichnet, daß die Rasthaken (15, 16, 17, 18) einen federnden Steg mit einem nach außen abgewinkelten Teil (19) aufweisen.

4. Vorrichtung nach Anspruch 3, dadurch gekennzeichnet, daß zu beiden Seiten des Steges der Rasthaken (15, 16, 17, 18) Schlitze (20, 21) vorgesehen sind.

5. Vorrichtung nach Anspruch 3 oder 4, dadurch gekennzeichnet, daß auf der Außenseite der Stege der Rasthaken (15, 16, 17, 18) Fixiernocken (22) für einen aufschiebbaren Sicherungsring (25) angeformt sind.

6. Vorrichtung nach einem der vorhergehenden Ansprüche, dadurch gekennzeichnet, daß das Innengewinde der Mutter (12) im Bereich der Rasthaken (15, 16, 17, 18) unterbrochen ist, so daß Innengewindeteile (13, 14) gebildet sind.

7. Vorrichtung nach einem der vorhergehenden Ansprüche, dadurch gekennzeichnet, daß der Außenumfang der Mutter (12) in den Bereichen zwischen den Rasthaken (15, 16, 17, 18) mit einer Rändelung (23) versehen ist.

8. Vorrichtung nach einem der vorhergehenden Ansprüche, dadurch gekennzeichnet, daß die Fixiervorrichtung aus einem achsparallel verlaufenden Steg (24), der an dem nach der Montageplatte (27, 28) zu liegenden Rand der Mutter (12) angeformt ist, und einer Nut (11) besteht, die sich in einem Zentrierring (4) des Einsatzgehäuses (1) befindet.

9. Vorrichtung nach Anspruch 8, dadurch gekennzeichnet, daß der Steg (24) an der Verbindungsstelle mit der Mutter (12) mit einer Sollbruchstelle versehen ist.

10. Vorrichtung nach einem der Ansprüche 1 bis 7, dadurch gekennzeichnet, daß die Fixiervorrichtung aus einem Fixiernocken (29) auf dem äußeren Umfang des Einsatzgehäuses (1) und einer Fixiernut (30) in der Innenwand der Mutter (12) gebildet ist.

11. Vorrichtung nach Anspruch 10, dadurch gekennzeichnet, daß der Fixiernocken (29) zwischen den beiden äußeren Gewindegängen des Außengewindes (6) des Einsatzgehäuses (1) und die Fixiernut (30) in einem äußeren Gewindegang (31) eines inneren Gewindeteiles (13) der Mutter (12) vorgesehen sind.
